# FASCICULE DE BREVET EUROPEEN

(11) **EP 3 744 679 B1**
(45) Date de publication et mention de la délivrance du brevet: **07.08.2024**
(21) Numéro de dépôt: 20176534.4
(22) Date de dépôt: 26.05.2020
(51) Int. Cl.: C01B 3/06

(54) **PREPARATION D'UNE SOLUTION DE BOROHYDRURE OU D'ALUMINOHYDRURE A PARTIR DE BOROHYDRURE OU D'ALUMINOHYDRURE SOLIDE A BORD D'UN ENGIN SOUS-MARIN**
ZUBEREITUNG EINER BORHYDRID- ODER ALUMINIUMHYDRIDLÖSUNG AUS EINEM FESTEN BORHYDRID- ODER ALUMINIUMHYD AM BORD EINES UNTERWASSERGERÄTS
PREPARATION OF A SOLUTION OF BOROHYDRIDE OR ALUMINIUM HYDRIDE FROM SOLID BOROHYDRIDE OR ALUMINIUM HYDRIDE ON BOARD AN UNDERWATER GEAR

(30) Priorité: 28.05.2019 FR 1905618
(43) Date de publication de la demande: 02.12.2020
(73) Titulaire: Naval Group, 75015 Paris (FR)
(72) Inventeur: LE CARFF, Franck, 56311 Lorient cedex (FR); BENAC, Stéphane, 56311 Lorient cedex (FR)
(74) Mandataire: Lavoix

(56) Documents cités:
- WO-A1-2017/145068
- WO-A2-03/084866
- TW-A- 201 213 230
- US-A- 5 372 617

## Description

La présente demande concerne le domaine de la propulsion d'engins sous-marins, et notamment la propulsion anaérobie (Air independent Propulsion - AIP) à pile à combustible, notamment à pile à hydrogène.

La propulsion anaérobie permet d'accroître significativement l'autonomie en plongée des engins sous-marins, et de limiter les retours réguliers vers la surface pour faire tourner les moteurs afin de recharger les batteries utilisées en immersion, ceci représentant des périodes d'indiscrétion indésirable.

La capacité à stocker un maximum d'hydrogène dans un volume limité est un enjeu fondamental des systèmes de production d'énergie AIP à pile à combustible.

Les borohydrures ou aluminohydrures (par exemple KBH₄, LiBH₄, NaAlH₄, KAlH₄, LiAlH₄ ou NaBH₄) sont un moyen de stockage et de production d'hydrogène par hydrolyse. Par la suite ces borohydrures ou aluminohydrures sont notés XH₄.

US5372617 A et TW20123230 A décrivent des systèmes et méthodes AIP pour engins sous-marins employant des borohydrures.

Les systèmes AIP usuels au XH₄ sont basés sur un stockage aqueux. Ainsi, WO 2017145068 propose un système un AIP avec pile à combustible type PAFC (pile à combustible à acide phosphorique), et un système de production d'hydrogène à base de solution de NaBH₄ sous forme liquide. Le NaBH₄ est ainsi stocké sous forme d'une solution aqueuse.

Le stockage de solutions de XH₄ présente cependant des désavantages techniques importants, tels que le poids, l'encombrement et la stabilité des solutions.

Il est donc nécessaire de mettre à disposition un moyen de stockage alternatif embarqué.

La présente invention propose le stockage embarqué du XH₄ sous forme solide et un procédé de préparation d'une solution de XH₄.

Selon un premier objet, la présente invention concerne un procédé de préparation d'une solution aqueuse d'un borohydrure ou d'un aluminohydrure noté XH₄ où X est choisi parmi KB, LiB, NaAl, KAI, LiAI ou NaB, embarqué dans un engin sous-marin, ledit procédé comprenant la dissolution de XH₄ sous forme de comprimés dans une solution aqueuse de dissolution conformément à la revendication 1.

Lesdits comprimés peuvent également être désignés sous la dénomination de « caplets ».

Sans être exhaustif, la présente invention permet de résoudre entre autres, les problèmes inhérents au stockage aqueux du XH₄ :
- En absence d'eau, le XH₄ solide ne produit pas d'hydrogène ce qui permet de contrôler la production d'hydrogène pendant la mission du navire ;
- Suppression des dégagements d'hydrogène indésirables lorsque la production d'hydrogène n'est pas nécessaire ;
- Suppression des problèmes de cristallisation XH₄ non maîtrisée dans les réservoirs ;
- Augmentation de la quantité de XH₄ embarqué par unité de volume (la fraction massique d'hydrogène du XH₄ solide étant supérieure à une solution de XH₄ concentrée).

On entend par « embarqué », le stockage du XH4 à bord d'un engin sous-marin, impliquant généralement une double limitation, d'ordre spatial (encombrement réduit) et énergétique (consommation restreinte).

Les termes « réserve » et « stockage » sont ici utilisés de façon interchangeable et désignent le stock de XH₄, dans un ou plusieurs containers.

On entend par « engin sous-marin » notamment un sous-marin proprement dit, ou tout autre équipement ou véhicule sous-marin nécessitant pour sa propulsion ou son fonctionnement une source d'hydrogène alimentée par XH4.

Le terme « réacteur d'hydrolyse » désigne l'appareil généralement constitué d'au moins un récipient et un moyen d'agitation dans lequel est conduite la réaction entre l'eau et XH₄, conduisant à la formation d'hydrogène, selon la réaction :

XH₄ + 2 H₂O -> 4 H₂ + XO₂

On entend par « solution aqueuse de dissolution » une solution à base d'eau utilisée pour dissoudre le XH₄ solide, de façon à former une solution aqueuse de XH₄. Ladite solution aqueuse de dissolution contient essentiellement de l'eau mais peut également contenir un ou plusieurs autres agents dissous, tels que des bases NaOH ou KOH aqueuses qui permettent la stabilisation de la solution....

Le terme « caisson de dissolution » désigne l'appareil généralement constitué d'au moins un récipient et d'un moyen d'agitation, dans lequel on peut réaliser le mélange de XH₄ dans l'eau, le mélange pouvant être réalisé de façon continue.

La dissolution est réalisée dans un caisson de dissolution et un réservoir de stockage des comprimés de XH₄.

Selon un mode de réalisation, le procédé comprend l'étape préalable d'ajout d'une solution aqueuse basique à de l'eau.

Selon un mode de réalisation, la solution aqueuse basique comprend de la soude (NAOH) et/ou de la potasse (KOH).

Selon un mode de réalisation, la solution aqueuse basique comprend une ou plusieurs bases à concentration comprise entre 1 et 10% en poids.

L'étape de dissolution du XH₄ dans la solution aqueuse de dissolution est conduite par circulation forcée de la solution aqueuse de dissolution entre ledit réservoir de stockage et le caisson de dissolution.

Selon un mode de réalisation, la dissolution est conduite jusqu'à ce que la concentration de XH₄ dans la solution aqueuse atteigne une valeur Cmax prédéterminée. Cmax est typiquement choisie de façon à être strictement inférieure à la concentration critique de cristallisation du XH₄.

Selon un mode de réalisation, ladite concentration critique dépend de la température de la solution aqueuse de dissolution.

Selon l'un ou l'autre des modes de réalisation, la solution de XH₄ peut avantageusement être stabilisée par une ou plusieurs bases.

Typiquement, la ou les bases peuvent présentes dans le XH₄ solide, dans la solution aqueuse de dissolution, et/ou dans la solution aqueuse de XH₄.

Selon un mode de réalisation, ledit procédé comprend l'étape initiale d'amorçage par dissolution de XH₄ solide par une solution aqueuse d'amorçage.

Selon un autre objet, la présente invention vise également un procédé de propulsion anaérobie (AIP, air independent propulsion) d'un engin sous-marin comprenant la production d'hydrogène (H₂) par hydrolyse de XH₄, caractérisé en ce qu'il comprend l'étape préalable de dissolution de XH₄ embarqué sous forme solide selon l'invention.

Selon un mode de réalisation, ledit procédé comprend le recyclage de l'eau de dissolution de la phase de production de H₂ pour l'alimentation de la solution aqueuse de dissolution.

Selon un autre objet, la présente invention concerne également un système embarqué au sein d'un engin sous-marin comprenant :
- Un réservoir de stockage (1) de XH₄ sous forme de comprimés ;
- Une arrivée (12,12') d'une solution aqueuse basique dans la solution (7) de dissolution ;
- Un caisson de dissolution (11);

Caractérisé en ce qu'il comprend au moins un moyen de circulation forcée de la solution aqueuse de dissolution (7) entre le caisson de dissolution (11) et le réservoir de stockage (1).

Selon un mode de réalisation, ledit système comprend :
- au moins un moyen de mesure (15) de la concentration de XH₄ dans le caisson de dissolution (11) et permettant de contrôler le flux de liquide arrivant dans le caisson de dissolution (11) en agissant sur le fonctionnement de la pompe (4").

Selon un mode de réalisation, ledit système peut également comprendre au moins un moyen d'extraction de la solution de XH₄ du caisson de dissolution lorsque la concentration de XH₄ dans la solution de dissolution atteint une valeur Cmax déterminée.

Afin de mesurer la concentration, on peut notamment utiliser un voltampéromètre ou un spectroscope d'impédance électrochimique par exemple.

Selon un mode de réalisation, le système comprenant des moyens de recyclage de l'eau produite lors de la production de H₂ vers l'arrivée d'eau.

L'invention sera mieux comprise à la lecture de la description qui va suivre, donnée uniquement à titre d'exemple et faite en se référant aux dessins annexés, sur lesquels :

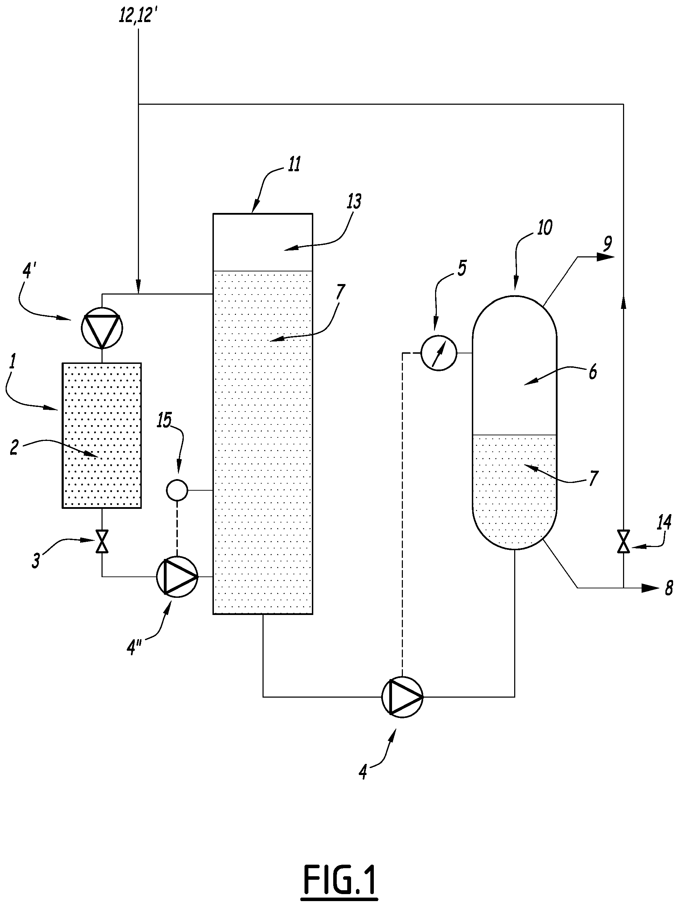

- [Fig 1] la figure 1 représente de façon schématique un système selon l'invention, permettant la mise en oeuvre du procédé selon l'invention.

On a en effet illustré sur la figure 1 un système de production d'hydrogène à partir de XH₄ solide embarqué comprenant :
un réservoir désigné par la référence générale 1 de XH₄ solide désigné par la référence générale 2, ledit XH₄ solide 2 étant transféré de façon classique par un système de convoyage muni de vanne désignée par la référence générale 3 et de pompe désignée par la référence générale 4, vers un caisson de dissolution 11 puis vers un réacteur d'hydrolyse désigné par la référence générale 10 permettant la production d'hydrogène désigné par la référence générale 6, à partir dudit XH₄ solide 2.

L'hydrogène formé 6 est ensuite extrait et transféré du réacteur vers une pile à combustible, de façon classique désignée par la référence générale 9, par exemple au moyen d'une pompe.

Le système peut comprendre un manomètre représenté par la référence générale 5 relié à la pompe 4 pour mesurer la pression de l'hydrogène formé et moduler le flux d'entrée du XH₄ liquide dans le réacteur 10.

Le système de la figure 1 comprend également des moyens de dissolution du XH₄ solide 2, préalablement à l'introduction dans le réacteur 10, selon l'invention.

Ainsi, le système comprend des moyens d'arrivée d'une solution aqueuse désignée par la référence générale 12 au XH₄ solide 2, et des moyens de circulation forcée de ladite solution aqueuse 7 entre un caisson de dissolution désigné par la référence générale 11 et le réservoir de stockage 1 de XH₄ solide 2, comme par exemple des pompes 4' et 4".

Ainsi, l'eau est ajoutée au XH₄ solide 2 et circule de façon forcée entre le réservoir 1 et le caisson de dissolution 11, de façon à former une solution aqueuse de XH₄ désignée par la référence générale 7.

A la sortie du mélangeur 11, une pompe 4 permet d'extraire la solution aqueuse de XH₄ 7 et de la transférer vers le réacteur d'hydrolyse 10.

La concentration en XH₄ dans la solution aqueuse de dissolution est mesurée par un indicateur 15, tel que la voltampérométrie ou la spectroscopie d'impédance électrochimique..., par exemple par soutirage de ladite solution dans le caisson de dissolution. Cet indicateur est relié à une pompe 4" afin de moduler le flux de la solution de dissolution entre le caisson de dissolution et le réacteur d'hydrolyse.

La solution aqueuse 12, typiquement de l'eau à laquelle est ajoutée une solution aqueuse basique 12' peut provenir d'une alimentation telle qu'un réservoir de stockage et/ou peut provenir du recyclage 14 de l'eau obtenue à l'issue de la réaction d'hydrolyse.

Typiquement le système fonctionne sous un flux d'azote, désigné par la référence générale 13.

## Revendications

1. Procédé de préparation d'une solution aqueuse d'un borohydrure ou d'un aluminohydrure noté XH₄ où X est choisi parmi KB, LiB, NaAl, KAI, LiAI ou NaB, embarqué dans un engin sous-marin, ledit procédé comprenant la dissolution de XH₄ sous forme de comprimés (2) dans une solution aqueuse de dissolution (7), tel que la dissolution est réalisée dans un caisson de dissolution (11) et un réservoir de stockage (1) des comprimés de XH₄ (2), et conduite par circulation forcée de la solution aqueuse de dissolution (7) entre ledit réservoir de stockage (1) et le caisson de dissolution (11).

2. Procédé selon la revendication 1 tel qu'il comprend l'étape préalable d'ajout d'une solution aqueuse basique à de l'eau (12, 12').

3. Procédé selon la revendication 2 tel que la solution aqueuse basique comprend de la soude (NAOH) et/ou de la potasse (KOH).

4. Procédé selon l'une quelconque des revendications 2 à 3 tel que la solution aqueuse basique comprend une ou plusieurs bases à concentration comprise entre 1 et 10% en poids.

5. Procédé selon l'une quelconque des revendications précédentes tel que la dissolution est conduite jusqu'à ce que la concentration de XH₄ dans la solution aqueuse (7) atteigne une valeur Cmax inférieure à la concentration critique de cristallisation du XH₄.

6. Procédé de propulsion anaérobie (AIP, air independent propulsion) d'un engin sous-marin comprenant la production d'hydrogène (H₂) par hydrolyse de XH₄, **caractérisé en ce qu'**il comprend l'étape préalable de dissolution de XH₄ embarqué sous forme solide (2) selon l'une quelconque des revendications 1 à 5.

7. Procédé selon la revendication 6 comprenant le recyclage (14) de l'eau produite lors de la production de H₂ dans solution aqueuse de dissolution.

8. Système embarqué au sein d'un engin sous-marin comprenant :
- Un réservoir de stockage (1) de XH₄ sous forme de comprimés (2) ;
- Une arrivée (12, 12') d'une solution aqueuse basique dans la solution de dissolution (7) ;
- Un caisson de dissolution (11) ; **caractérisé en ce qu'**il comprend au moins un moyen (4', 4") de circulation forcée de la solution aqueuse de dissolution (7) entre le caisson (11) de dissolution et le réservoir de stockage (1).

9. Système selon la revendication 8 tel qu'il comprend :
- au moins un moyen de mesure (15) de la concentration de XH₄ dans le caisson de dissolution (11) et permettant de contrôler le flux de liquide arrivant dans le caisson de dissolution (11) en agissant sur le fonctionnement de la pompe (4").

## Patentansprüche

1. Verfahren zur Herstellung einer wässrigen Lösung eines Borhydrids oder Aluminhydrids mit der Bezeichnung XH₄, wobei X ausgewählt ist aus KB, LiB, NaAl, KAI, LiAl oder NaB, an Bord eines Unterwasserfahrzeugs, das Verfahren umfassend das Auflösen von XH₄ in Form von Tabletten (2) in einer wässrigen Auflösungslösung (7), sodass das Auflösen in einer Auflösungskammer (11) durchgeführt wird, und
einen Speicherbehälter (1) für XH₄-Tabletten (2),
und erzwungenes Leiten der wässrigen Auflösungslösung (7) zwischen dem Speicherbehälter (1) und der Auflösungskammer (11).

2. Verfahren nach Anspruch 1, das den vorherigen Schritt eines Hinzufügens einer basischen wässrigen Lösung zu dem Wasser (12, 12') umfasst.

3. Verfahren nach Anspruch 2, wobei die basische wässrige Lösung Soda (NAOH) und/oder Pottasche (KOH) umfasst.

4. Verfahren nach einem der Ansprüche 2 bis 3, wobei die wässrige basische Lösung eine oder mehrere Basen in einer Konzentration zwischen 1 und 10 Gewichts-% umfasst.

5. Verfahren nach einem der vorhergehenden Ansprüche, wobei das Auflösen so lange durchgeführt wird, bis die Konzentration von XH₄ in der wässrigen Lösung (7) einen Wert Cmax erreicht, der niedriger ist als die kritische Kristallisationskonzentration von XH₄.

6. Verfahren zum anaeroben Antrieb (AIP, air independent propulsion) eines Unterwasserfahrzeugs, umfassend die Erzeugung von Wasserstoff (H₂) durch Hydrolyse von XH₄, **dadurch gekennzeichnet, dass** es den vorherigen Schritt eines Auflösens von XH₄ an Bord in fester Form (2) nach einem der Ansprüche 1 bis 5 umfasst.

7. Verfahren nach Anspruch 6, umfassend das Recycling (14) des Wassers, das bei der Herstellung von H₂ in wässriger Auflösungslösung erzeugt wird.

8. System an Bord eines Unterwasserfahrzeugs, umfassend:
- einen Speicherbehälter (1) für XH₄ in Form von Tabletten (2);
- eine Zufuhr (12, 12') einer basischen wässrigen Lösung in der Auflösungslösung (7);
- eine Auflösungskammer (11);
**dadurch gekennzeichnet, dass** es mindestens eine Einrichtung (4', 4") zur erzwungenen Zirkulation der wässrigen Auflösungslösung (7) zwischen der Auflösungskammer (11) und dem Speicherbehälter (1) umfasst.

9. System nach Anspruch 8, das Folgendes umfasst:
- mindestens eine Einrichtung (15) zum Messen der Konzentration von XH₄ in der Auflösungskammer (11) und zum Ermöglichen einer Steuerung des Flüssigkeitsstroms, der in die Auflösungskammer (11) gelangt, indem auf den Betrieb der Pumpe (4") eingewirkt wird.

## Claims

1. Process for the preparation of an aqueous solution of a borohydride or an aluminohydride denoted XH₄ where X is chosen from KB, LiB, NaAl, KAI, LiAl or NaB, carried in an underwater vehicle, said process comprising dissolution of XH₄ in the form of tablets (2) in an aqueous dissolution solution (7), such that the dissolution is carried out in a dissolution chamber (11) and a storage reservoir (1) of XH₄ tablets (2), and is carried out by forced circulation of the aqueous dissolution solution (7) between said storage reservoir (1) and the dissolution chamber (11).

2. Process according to claim 1 such that it comprises the prior step of adding a basic aqueous solution to water (12, 12').

3. Process according to claim 2 such that the basic aqueous solution comprises soda (NAOH) and/or potash (KOH).

4. Process according to any one of claims 2 to 3 such that the basic aqueous solution comprises one or more bases at a concentration between 1 and 10% by weight.

5. Process according to any one of the preceding claims, such that the dissolution is carried out until the concentration of XH₄ in the aqueous solution (7) reaches a Cmax value lower than the critical crystallization concentration of XH₄.

6. Process of anaerobic propulsion (AIP, Air Independent Propulsion) of an underwater vehicle comprising the production of hydrogen (H₂) by hydrolysis of XH₄, **characterized in that** it comprises the preliminary step of dissolution of on-board XH₄ in solid form (2) according to any one of claims 1 to 5.

7. Process according to claim 6 comprising recycling (14) of the water produced during the production of H₂ in an aqueous dissolution solution.

8. On-board system within an underwater vehicle comprising:
- A storage reservoir (1) of XH₄ in the form of tablets (2);
- An inlet (12, 12') of a basic aqueous solution in the dissolution solution (7);
- A dissolution chamber (11);
**characterized in that** it comprises at least one means (4', 4") of forced circulation of the aqueous dissolution solution (7) between the dissolution chamber (11) and the storage reservoir (1).

9. System according to claim 8 as it comprises:
- at least one means (15) for measuring the concentration of XH₄ in the dissolution chamber (11), and making it possible to control the flow of liquid arriving in the dissolution chamber (11) by acting on the operation of the pump (4").
